Europäisches Patentamt

European Patent Office

Office européen des brevets

(11) Publication number: **0 176 763**
**B1**

# EUROPEAN PATENT SPECIFICATION

(45) Date of publication of patent specification: **29.11.89**

(21) Application number: **85110812.6**

(22) Date of filing: **28.08.85**

(51) Int. Cl.⁴: **G 09 G 3/18**, G 02 F 1/137

(54) **Liquid crystal device and method of driving the same.**

(30) Priority: **05.09.84 JP 184646/84**

(43) Date of publication of application:
**09.04.86 Bulletin 86/15**

(45) Publication of the grant of the patent:
**29.11.89 Bulletin 89/48**

(84) Designated Contracting States:
**CH DE FR GB IT LI NL SE**

(56) References cited:
**EP-A-0 092 181**
**DE-A-2 501 114**
**DE-A-2 523 763**
**DE-A-2 931 392**
**DE-A-3 414 704**
**DE-B-2 054 779**
**DE-B-2 154 877**
**DE-B-2 521 116**
**US-A-4 367 924**

(73) Proprietor: **HITACHI, LTD.**
**6, Kanda Surugadai 4-chome Chiyoda-ku**
**Tokyo (JP)**

(72) Inventor: **Ohwada, Junichi**
**Mikanohara-ryo 207 2-20-21, Mizuki-cho**
**Hitachi-shi Ibaraki-ken (JP)**
Inventor: **Kondo, Katsumi**
**1-19-3-401, Ishinazaka-cho**
**Hitachi-shi Ibaraki-ken (JP)**

(74) Representative: **Patentanwälte Beetz sen. -**
**Beetz jun. Timpe - Siegfried - Schmitt-Fumian**
**Steinsdorfstrasse 10**
**D-8000 München 22 (DE)**

Courier Press, Leamington Spa, England.

## Description

The present invention relates to an active matrix liquid crystal device on the basis of a ferroelectric liquid crystal and a method of driving the same.

Liquid crystal devices are widely used in displays, optical shutters, polariscopes, etc. Active matrix displays are displays wherein a plurality of display portions is formed comprising a switching element such as thin-film transistor (TFT) which is in contact with a liquid crystal. This arrangement is suited for high-definition and large-area displays having a large number of scanning lines. In case of forming an active matrix wherein a liquid crystal, such as a twisted nematic (TN) or a guest/host type liquid crystal, the light transmissivity of which depends upon the effective value of an applied voltage, and TFTs are used, a display whose number of scanning lines is large can be formed when the off-resistance $R_{off}$ of the TFTs is sufficiently high, and the on-resistance $R_{on}$ thereof is sufficiently low, and when the time constant based on the current leakage of the liquid crystal itself is sufficiently great. However, displays of favorable characteristics cannot be obtained if any one of the parameters mentioned above is unsatisfactory.

The drive characteristics of an active matrix display employing a liquid crystal such as TN liquid crystal, the display state of which depends upon the effective value of the applied voltage, have been published in Collection of Preliminary Manuscripts of All-Japan Meeting of the Television Society in 1983, pp. 121—122.

In accordance with these characteristics when the waveform of the voltage to be applied to a liquid crystal layer is calculated with a parameter being the off-resistance $R_{off}$ of a switching element such as thin-film transistor (TFT), a condition which permits display is $V_s > V_{ns}$ where $V_s$ denotes the effective value of the select voltage, and $V_{ns}$ denotes the effective value of a non-select voltage. It is understood that better display characteristics are attained as the off-resistance of the switching element is higher. In case of employing a TN liquid crystal in the active matrix display, therefore, improvements have been made by rendering the off-resistance $R_{off}$ of the switching element sufficiently high.

However, there has been known, for example, the phenomenon that the off-resistance of the TFT element lowers under the action of the light of a light source for illuminating the display. For coping with this, it has been proposed to hold the off-resistance $R_{off}$ high e.g. for amorphous silicon TFTs by providing a metal film for intercepting light and preventing it from entering the channel portion, and for polycrystalline silicon TFTs by modifying the structure of the switching element, etc. In view of this situation, however, the characteristics of TFTs are not satisfactory for switching elements for active matrices, for such reasons that processes for manufacturing these elements become complicated, and that lowering of the off-resistance $R_{off}$ is inevitable with intense illumination light.

Ferroelectric liquid crystals having memory capabilities per se are known e.g. from Applied Physics Letters 36(11), pp. 899—901, from Molecular Crystal & Liquid Crystal, Vol. 94, pp. 213—234, and from JP—A—56-107216. However, these studies did not allow a practical application to active matrix displays.

DE—B—20 54 779 discloses an active matrix liquid crystal display device comprising a liquid crystal sandwiched between display electrodes and switching elements disposed at the respective intersection points between a plurality of signal electrodes and a plurality of scanning electrodes and switching the respective display portions. According to this prior art, the voltage signals applied to the liquid crystal elements are of alternating opposite polarity so as to maintain a mean charge of zero in subsequent scanning periods.

DE—A1—29 31 392 relates to a driving circuit for driving active matrix liquid crystal devices having about the same principal construction as the above mentioned prior art and which proposes to hold the DC-level of the voltage applied to the display elements as close as possible to zero.

It is the object of the present invention to provide an active matrix liquid crystal device suited for constructing liquid crystal devices having a large number of scanning lines and for displaying a large quantity of information, and a driving method therefor.

The above object is achieved according to claims 1 and 7. The dependent claims relate to preferred embodiments.

The present invention is based on the utilization of the memory characteristics found in ferroelectric liquid crystals.

The active matrix liquid crystal device according to the invention comprises

a liquid crystal sandwiched between display electrodes defining display portions and switching elements disposed at the respective intersection points between a plurality of signal electrodes and a plurality of scanning electrodes and switching the respective display portions; it is characterized in that

— the liquid crystal is a bistable ferroelectric liquid crystal,

— the switching elements are three-terminal switching elements having their control terminal connected to the respective scanning electrodes, one main terminal connected to the respective signal electrode and the other main terminal to one of the display electrodes,

— a control element is disposed at the juncture between each switching element and one of the display electrodes which is adapted, when the switching element is in its OFF-state, to hold the absolute value of the crest value of the voltage applied to the liquid crystal below its threshold value, and, when the switching element is in its ON state, to apply a first voltage signal the absolute value of its crest value being less than the threshold value to the liquid crystal so as to hold it in the respective display portion in a light transmissive state, and to apply a second voltage signal the absolute value of its crest value being not less than the threshold value to the liquid crystal so as to change the light transmissive state.

The present method of driving active matrix liquid crystal devices comprising a liquid crystal sandwiched between display electrodes defining display portions and switching elements disposed at the respective intersection points between a plurality of signal electrodes and a plurality of scanning electrodes and switching the respective display portions is characterized in that

— a bistable ferroelectric liquid crystal is used,

— three-terminal switching elements are used having their control terminal connected to the respective scanning electrode, one main terminal connected to the respective signal electrode and the other main terminal to one of the display electrodes, and

— the following functions are carried out by means of control elements disposed at the juncture between each switching element and one of the display electrodes: when the switching element is in its OFF-state, the absolute value of the crest value of the voltage applied to the liquid crystal is held below its threshold value,

and, when the switching element is in its ON state, a first voltage signal the absolute value of its crest value being less than the threshold value is applied to the liquid crystal so as to hold it in the respective display portion in a light transmissive state, and a second voltage signal the absolute value of its crest value being not less than the threshold value is applied to the liquid crystal so as to change the light transmissive state.

In the following, the invention will be explained with reference to the drawings.

Fig. 1 is a circuit diagram of an embodiment of the present invention;

Figs. 2, 5, 7, 8, 9, 11 and 13 are practicable circuit diagrams of embodiments;

Figs. 3, 4, 6, 10, 12, 14 and 15 are diagrams showing drive waveforms;

Fig. 16 is a sectional view of an embodiment;

Fig. 17 is a sectional view of a test device; and

Figs. 18, 19(a) to 19(c), 20(a) and 20(b), and 21 are fundamental characteristic diagrams of a ferroelectric liquid crystal.

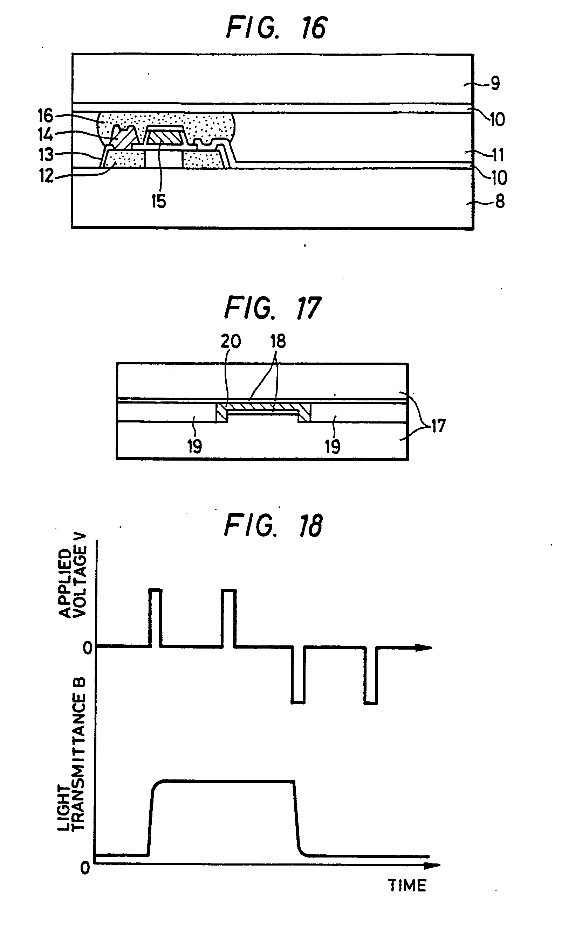

First, the construction of a test device will be described with reference to Fig. 17.

The liquid crystal device is constructed of two transparent substrates 17 made of glass, plastics or the like each comprising a transparent electrode 18, a PET (polyethylene terephthalate) film spacer 19, and a ferroelectric liquid crystal 20. One of the transparent substrates 17 is etched using a photoresist and a solution of hydrofluoric acid, and is provided with a stepped part as shown in Fig. 17. With such stepped part, notwithstanding that it is difficult to obtain a liquid crystal layer having a thickness not greater than 2 μm, liquid crystal devices having gaps not greater than 2 μm can reproducibly fabricated. As the ferroelectric liquid crystal, a mixed material consisting of four ingredients indicated in the following table was used.

$$C_8H_{17}-O-\bigcirc-CH=N-\bigcirc-\overset{\overset{\textstyle O}{\|}}{C}-O-CH_2-\overset{\overset{\textstyle CH_3}{|}}{{}^*CH}-C_2H_5$$

21 mole %

$$C_8H_{17}-O-\bigcirc-\bigcirc-\overset{\overset{\textstyle O}{\|}}{C}-O-CH_2-\overset{\overset{\textstyle CH_3}{|}}{{}^*CH}-C_2H_5$$

21 mole %

$$C_8H_{17}-\bigcirc-\overset{O}{\overset{\|}{C}}-O-\bigcirc-\bigcirc-\overset{O}{\overset{\|}{C}}-O-CH_2-\overset{CH_3}{\overset{|}{*CH}}-C_2H_5$$

29 mole %

$$C_7H_{15}-O-\bigcirc-\overset{O}{\overset{\|}{C}}-O-\bigcirc-\bigcirc-\overset{O}{\overset{\|}{C}}-O-CH_2-\overset{CH_3}{\overset{|}{CH}}--C_2H_5$$

29 mole %

$< 0\ °C \qquad 52\ °C \qquad 118\ °C$

cristalline phase $\underset{\longleftarrow}{\longrightarrow}$ smectic $C^*$ phase $\underset{\longrightarrow}{\longleftarrow}$ smectic $A$ phase $\longleftrightarrow$ isotropic phase

The gap was set to 1.6 µm, and the transparent electrodes 18 were not subjected to any surface treatment such as coating with an orientation film and rubbing.

Next, a method of orienting the liquid crystal molecules will be explained. First, the liquid crystal was heated to a temperature slightly higher than the liquid crystal phase — isotropic phase transition temperature thereof (about 120°C in this case), for bringing it into the isotropic phase. Thereafter, it was cooled gradually at approximately 0.1°C/min to bring it into the smectic A phase (with the major axes of the molecules being perpendicular to the plane of the layer). At this time, owing to an interface effect at the side of the cell (the interface between the liquid crystal and the spacer film), the liquid crystal grew while the major axes of the molecules were becoming parallel to the interface, and the layer was becoming perpendicular thereto. Soon, a favorable mono-domain was formed in a region sufficient for measurements. In the process of growing the mono-domain, the smectic A phase was formed in which the major axes of the molecules and a normal to the layer were perpendicular to each other. However, when the liquid crystal was further cooled gradually to below 54°C, the smectic C* phase in which the major axes of the molecules are inclined with respect to the normal to the layer was formed while the planeness of the layer was maintained. By observations to be stated below, it has been confirmed that in the present device, the spiral structure disappears, while a structural bistability appears.

The measured results of the relationship between the waveform of the voltage applied to the device and the light transmissivity (hereinbelow, expressed as 'brightness') of the device will be explained. The measurements of electrooptic characteristics were conducted using a monochromatic light source of a wavelength of 550 nm under a polarizing microscope with crossed prisms equipped with a light intensity detector, and the temperature of the sample was set at the room temperature of 23°C. Owing to the bistability of the molecular orientation, in this liquid crystal, an electrooptical memory capability appeared. It has been confirmed that the information was stored for several months or more even after the removal of the electric field, and, as illustrated in Fig. 18, bright and dark light-transmissive states reversed for the first time when a pulse opposite in polarity to the pulse applied before was applied. In the case where the polarity of a voltage pulse applied to the liquid crystal is the same as that of the pulse applied before, the brightness does not change. In the case where, after the application of a voltage pulse which has a width (time width) and a crest value high enough to perfectly reverse the bright and dark light-transmissive states, a voltage pulse equal in width but opposite in polarity, the crest value of which being denoted by $V_{LC}$, is applied, no optical response takes place when the absolute value of $V_{LC}$ is less than a certain value (including also zero). In the present invention, the threshold voltage at which an optical response begins to occur is defined to be $V_{th}^{(+)}$ for $V_{LC} > 0$ and to be $V_{th}^{(-)}$ for $V_{LC} < 0$. Further, the voltage region corresponding to $-V_{th}^{(-)} < V_{LC} < V_{th}^{(+)}$ is defined as the dead zone. When the absolute value $|V_{LC}|$ of the voltage applied to the liquid crystal is at least $V_{th}^{(+)}$ or at least $V_{th}^{(-)}$, the variation rate of the brightness B is greater as the voltage value is larger. However, saturation values $V_{sat}^{(+)}$ and $V_{sat}^{(-)}$ exist for the brightness B, and the voltage dependence disappears at or above a certain voltage value.

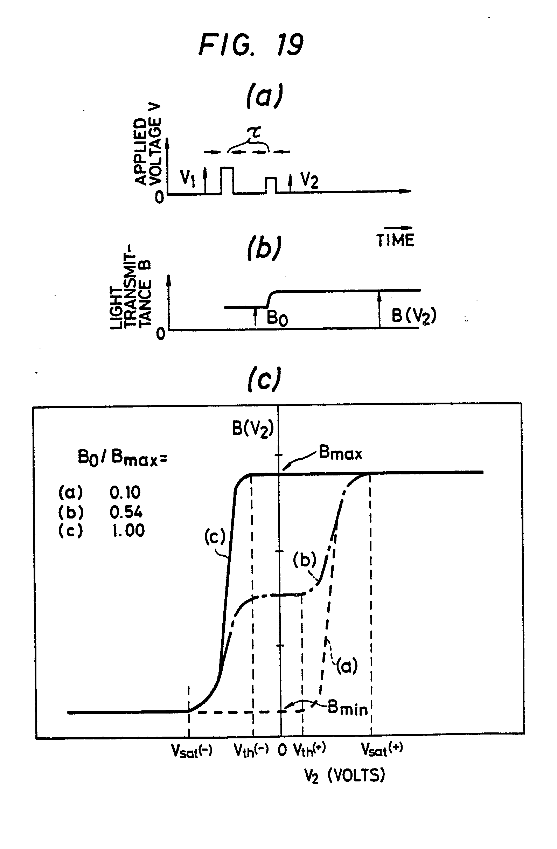

Fig. 19(c) has been obtained from measurements of brightness (Fig. 19(b)) in the case where two voltage pulses shown in Fig. 19(a) were applied. The initial value $B_0$ of the brightness is set by the preceding

4

voltage pulse (crest value $V_1$) of the applied signal. At this time, if the value $V_1$ is plus and sufficiently large, the initial value $B_0$ of the brightness is the maximum value $B_{max}$, following the characteristic of the solid line (c) in Fig. 19(c) in which the abscissa axis represents the crest value $V_2$ of the second voltage pulse. In addition, if the value $V_1$ is minus and sufficiently large, the initial value $B_0$ of the brightness is the minimum value $B_{min}$, and the characteristic versus the value $V_2$ becomes as shown by the broken line (a) in Fig. 19(c). Further, if the initial value $B_0$ of the brightness is an intermediate value $B_b$ when the value $V_1$ is any fixed value, then the characteristic versus the value $V_2$ becomes as shown by the dot-and-dash line (b) in Fig. 19(c).

The threshold voltages $V_{th}^{(+)}$, $V_{th}^{(-)}$ and the saturation voltages $V_{sat}^{(+)}$, $V_{sat}^{(-)}$ described before are indicated in Fig. 19(c).

In Fig. 19(a), the pulse width $\tau$ is held constant at 1 ms.

It has been confirmed in this example that both the threshold voltages $V_{th}^{(+)}$ and $V_{th}^{(-)}$ were about 4 V irrespective of the initial states, and that the saturation voltages $V_{sat}^{(+)}$ and $V_{sat}^{(-)}$ were about 11 V. The measurements were carried out with a display area of approximately $0.5 \times 0.5$ mm$^2$.

The intermediate states of brightness are due to a large number of coexisting domains in the bright and dark states having diameters of approximately several micrometers to several tens of micrometers. The electrooptical memory capability as well as the hysteresis corresponding thereto, and the presence of the dead zone, namely, the abrupt threshold characteristics beteen the values $V_{LC}$ and B, have been confirmed by the above experiments. In the present invention, the memory capability and the presence of the dead zone are positively utilized, and therefore, the liquid crystal device according to the present invention can be used as a display device, an optical shutter device, a polarizer device, etc.

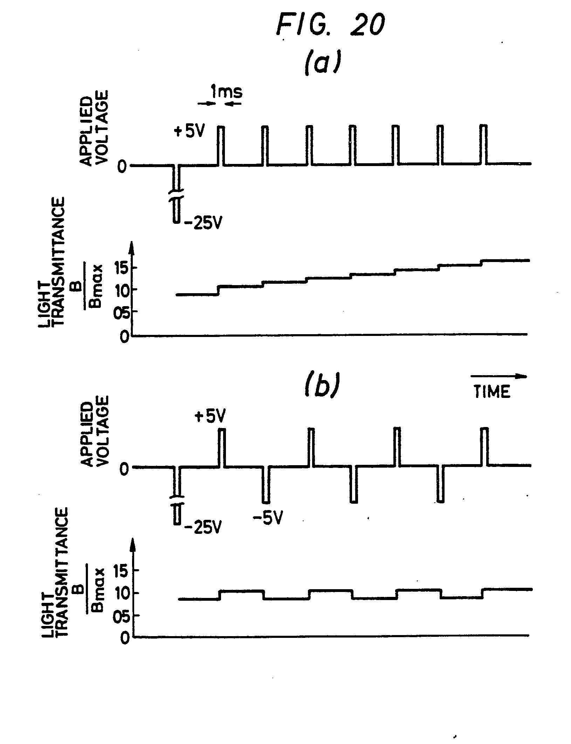

In the following, further two experiments are explained relating to the active matrix driving. First, the optical response in the case of repeatedly applying a voltage $V_{LC} \gtrsim V_{th}^{(+)}$ $V_{th}^{(+)} \approx V_{th}^{(-)}$, and set at 5 V here) slightly outside the dead zone was measured. Results are shown in Figs. 20(a) and 20(b). Here, the brightness is indicated by values normalized with the maximum value $B_{max}$ thereof. As may be seen from the experimental results shown in Fig. 20(a), when pulses of an identical polarity are repeatedly applied, the variations in the brightness are accumulated, whereas, as shown in Fig. 20(b), when the polarity is successively inverted, no accumulation occurs. These results signify that, in case the brightness of a picture element is not to be changed, the applied voltage must be kept within the dead zone, or that pulses exceeding the dead zone and of identical polarity need to be prevented from being successively applied.

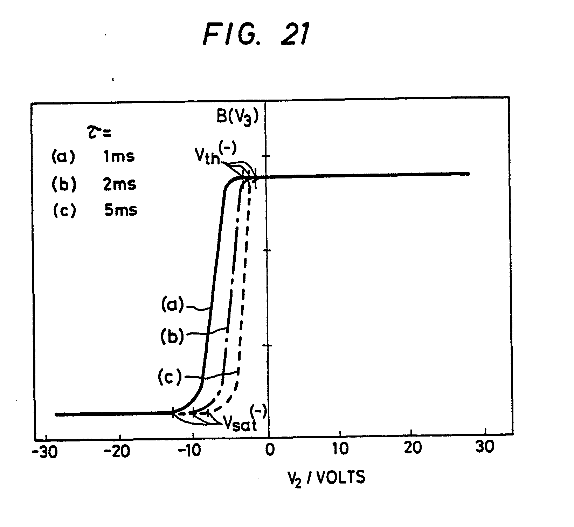

In another experiment, the same relations between applied voltages and brightness as in Figs. 20(a) and 20(b) were measured by changing the pulse width $\tau$. The results obtained are shown in Fig. 21. When the pulse width $\tau$ is increased, both $V_{th}^{(-)}$ and $V_{sat}^{(-)}$ lower. Since these results hold for each of the three characteristics (a), (b) and (c) of Fig. 21, it follows thereform that driving is also possible with modulation of the pulse width $\tau$.

While the description has thus far been made for a liquid crystal device through which light is transmitted from the rear surface thereof, similar results apply for the so-called reflection type devices provided with a reflector plate at the rear surface thereof. Besides, they also hold true for the so-called guest-host type devices in which a coloring matter is mixed in the liquid crystal. In this case, the substrate on the rear side does not need to be transparent.

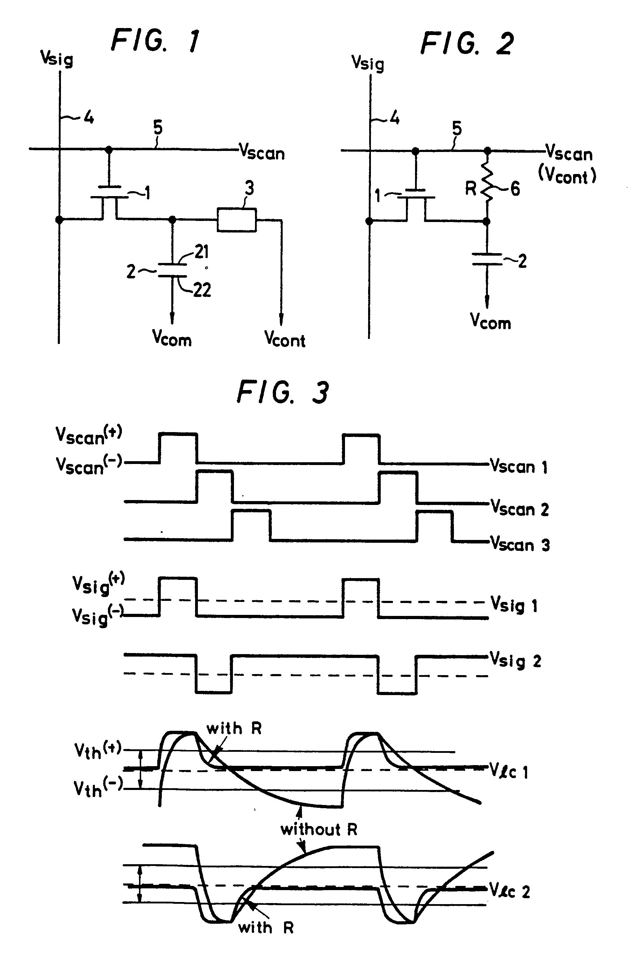

Now, an embodiment of the display according to the present invention comprising a ferroelectric liquid crystal and an active matrix in combination will be described with reference to Fig. 1. One picture element is constructed of a three-terminal switching element 1 such as thin-film transistor, a sandwiched ferroelectric liquid crystal layer 2, deisplay electrodes 21 and 22, a signal electrode 4, a scanning electrode 5, and a control element 3 such as a resistor. The active matrix comprises a plurality of picture elements disposed at the respective intersection points between a plurality of scanning electrodes 5 and a plurality of signal electrodes 4. The construction except the control element 3 corresponds to the construction of picture elements of hitherto known active matrix displays. The control terminal of the three-terminal switching element 1 is connected to the scanning electrode 5, whereas one main terminal thereof is connected to the signal electrode 4, and the other main terminal to the display electrode 21. The control element 3 is disposed between a potential $V_{cont}$ and the juncture of the other main terminal of the three-terminal switching element 1 and the display electrode 21. The display electrode 22 is connected to a potential $V_{com}$. The characterizing feature of the present invention consists in that the control element 3 is added anew and that the control signal $V_{cont}$ is applied to the liquid crystal 2 through the control element 3 so as to control the light transmissive state of the liquid crystal. The control signal $V_{cont}$ may be externally applied separately from the scanning voltage $V_{scan}$ or a signal voltage $V_{sig}$, or may well be applied by utilizing the voltage of a certain contact within the display portion.

The effect of the control element 3 in Fig. 1 is as follows. When the switching element 1 is in the off-state, the absolute value of the crest value of the voltage applied to the ferroelectric liquid liquid crystal 2 may be held less than the absolute value of the threshold voltage ($|V_{th}|$) of the ferroelectric liquid crystal. Since the display state of the ferroelectric liquid crystal 2 has the voltage (electric field) dependence and memory characteristics as explained above, the voltage applied to the liquid crystal layer does not need to be held even when the switching element 1 is off, unlike the case of the TN liquid crystal. More specifically, when the picture element to be displayed has the scanning voltage applied to the scanning electrode 5 and has the switching element 1 turned on, the signal voltage is applied from the signal electrode 4 to the liquid crystal 2 through the switching element 1. If the absolute value of the applied voltage is outside the dead zone width (from $V_{th}^{(-)}$ to $V_{th}^{(+)}$), the state of the liquid crystal layer 2 is determined in correspondence with the applied voltage. Thereafter, even when the switching element 1 turns on and any voltage the absolute value of which is smaller than that of the threshold voltage ($|V_{th}|$) is applied to the liquid crystal 2, the state of the liquid crystal 2 remains unchanged. That is, in the case where the switching element 1 turns on and a signal voltage outside the dead zone width is to be applied, the control element 3 functions to control the voltage to be applied to the liquid crystal layer to be outside the dead zone, and in the case where in spite of the switching element 1 being on, a signal voltage the absolute value of which is smaller than the threshold value ($|V_{th}|$) is to be applied to the liquid crystal 2, and in a case where the switching element 1 is off, the control element 3 functions to control the voltage to be within the dead zone.

Now, the present embodiment will be described with reference with practicable examples of circuit arrangements. The example of Fig. 2 is such that one end of a resistor 6 of resistance R representing the control element 3 is connected to the scanning electrode 5. When $R_{on}$ denotes the on-resistance of the switching element 1 (in the following description, the switching element shall be assumed to be a thin-film transistor, TFT), and $R_{off}$ denotes the off-resistance, the value R of the resistor 6 is set within the range of $R_{on} > R > R_{off}$. As the control voltage $V_{cont}$ in Fig. 1, the scanning voltage $V_{scan}$ itself is employed.

One actual example of the waveforms of voltages applied to the circuit of Fig. 2 is shown in Fig. 3. The waveforms in Fig. 3 are those of a two-tone display. $V_{scan}1$, $V_{scan2}$, . . . indicate scanning voltages which are applied to the scanning electrodes 5, $V_{sig1}$ a signal voltage which is applied to a selected picture element, $V_{sig2}$ a signal voltage which is applied to a non-selected picture element, $V_{lc1}$ a voltage which is applied to the liquid crystal layer of the selected picture element, and $V_{lc2}$ a voltage which is applied to the liquid crystal layer of the non-selected picture element. Here, for the sake of convenience in the description, the selected picture element is assumed to be a picture element which has a plus voltage applied to the liquid crystal layer thereof, and the non-selected picture element is a picture element which has a minus voltage applied.

The signal voltages $V_{sig1}$ and $V_{sig2}$ in Fig. 3 illustrate the voltage waveforms of the picture elements the applied voltage conditions of which are the extreme cases for the selected picture elements and the non-selected picture elements, respectively. This means that, if a display is possible under these conditions, it is possible under any display conditions. In addition, regarding the voltages which are applied to the liquid crystal 2, Fig. 3 also comprises waveforms for the case where the resistors 6 are not connected, in order to examine the effect of the resistors 6 for both the selected and non-selected picture elements.

The voltage levels of the applied waveforms are determined as follows. The high level voltage of the scanning voltage $V_{scan}$ is denoted by $V_{scan}^{(+)}$ and the low level voltage by $V_{scan}^{(-)}$, the high level voltage of the signal voltage $V_{sig}$ is denoted by $V_{sig}^{(+)}$ and the low level voltage by $V_{sig}^{(-)}$, the common electrode (counter electrode) voltage is denoted by $V_{com}$, the on-resistance of the TFT is denoted by $R_{on}$ and the off-resistance by $R_{off}$, and the resistance of the resistor 6 is denoted by R. The capacitance of the liquid crystal 2 and the respective resistance values are assumed to be determined such that the liquid crystal 2 can be sufficiently charged and discharged within a scanning period. It is also assumed that the relation of $R_{on} \ll R \ll R_{off}$ holds. As a criterion therefor, the value of $R/R_{on}$ or $R_{off}/R_{on}$ should be approximately 10 or more. This is not a very severe condition, but it can be readily realized in an ordinary TFT structure. In the selected picture element, in order that the second voltage signal whose crest value has an absolute value not smaller than that of the threshold value ($|V_{th}|$) may be applied in the scanning period during which the TFT switching element 1 turns on, and that the liquid crystal may be held at the first voltage signal whose crest value has an absolute value smaller than that of the threshold value ($|V_{th}|$), within the non-scanning period during which the switching element 1 turns off, the following conditions are required:

$$\left| V_{sig}^{(+)} - V_{com} \right| > V_{th}^{(+)} \text{ , and}$$

$$V_{th}^{(-)} < \left| V_{scan}^{(-)} - V_{com} \right| < V_{th}^{(+)} .$$

On the other hand, in the non-selected picture element, in order that a minus voltage with respect to the low level $V_{th}^{(-)}$ of the dead zone may be applied in the scanning period during which the switching element 1 turns on, and that the liquid crystal may be held at a voltage within the dead zone, within the non-scanning period during which the TFT element 1 turns off, the following conditions are required:

$$- \left| V_{sig}^{(-)} - V_{com} \right| < V_{th}^{(-)} \text{ , and}$$

$$V_{th}^{(-)} < \left| V_{scan}^{(-)} - V_{com} \right| < V_{th}^{(+)} .$$

By establishing such voltage conditions and the respective resistance values as stated before, the voltages which are applied to the liquid crystal can be put into the waveforms $V_{lc1}$ and $V_{lc2}$ of Fig. 3. That is, in the selected picture element, only when the switching element 1 is on, and the picture element has been scanned, the voltage exceeds the upper limit of the dead zone, namely, the threshold value $V_{th}^{(+)}$, and the

EP 0 176 763 B1

light transmissive state of the liquid crystal 2 changes, so that display information is memorized. When the switching element 1 is off, and the picture element is not scanned, the absolute value of the crest value of the voltage applied to the liquid crystal is held smaller than that of the threshold value ($|V_{th}|$), so that display information is held. Similarly, in the non-selected picture element, only when the switching element 1 is on, and the picture element has been scanned, a voltage below the lower limit of the dead zone, namely, the threshold voltage $V_{th}^{(-)}$, is applied, so that display information is memorized. In contrast thereto, when no resistor 6 is provided, the voltage of the liquid crystal device exceeds the dead zone in the period in which the picture element is not selected, on account of the leakage current having passed through the off-resistance $R_{off}$ of the TFT element 1. It is understood that the light transmissive state changes, and that display information cannot be held.

While the above analysis has been made under the assumption of $R_{on} << R << R_{off}$, driving is also possible in such a way that the resistance R of the resistor 6 is determined so as to fulfil the condition of $R_{on} < R < R_{off}$, and that the voltages to be applied to the liquid crystal layer are calculated on the basis of the division of the respective resistances.

When, as in the present embodiment of an active matrix display, the resistor 6 is provided, the characteristics required for the switching element 1 are not so extreme. In conventional active matrix devices, the ratio between the absolute values of the on-resistance $R_{on}$ of a switching element determining the period of time of writing into a liquid crystal layer, and the off-resistance $R_{off}$ of the switching element for holding the voltage of the liquid crystal layer, the on/off ratio $R_{off}/R_{on}$ must have a value of $10^4$ or more, increasing with the number of display picture elements. In contrast thereto, in the embodiment of the present invention, the decisive factor for determining the applied voltage is the relation of $R_{on}$, $R_{off}$ and R, and R may be selected in conformity with the resistances $R_{on}$ and $R_{off}$ of the switching element such as a TFT. Further, since the voltage at the liquid crystal layer is determined by the division ratio of these resistances, the ratio of $R_{off}/R_{on}$ does not need to be set to a very high value. Besides, there is no need for a storage capacitor which has heretofore been provided for holding the voltage of the liquid crystal layer. In this manner, the present invention well suited for active matrix devices.

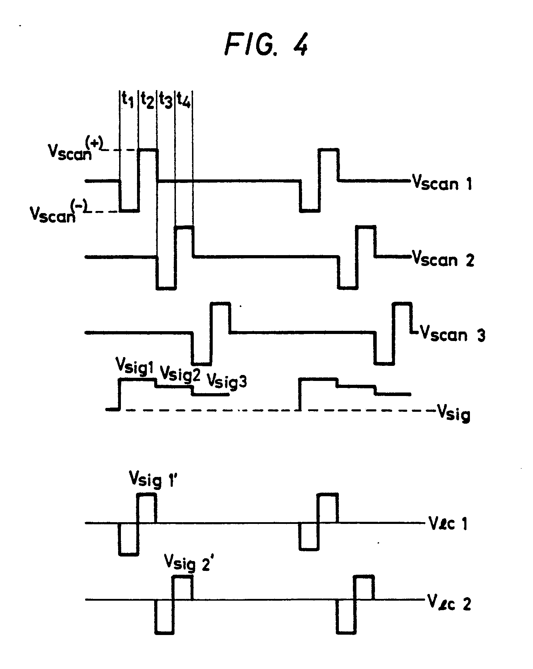

Next, an example for drive waveforms in the case of performing half-tone displays with the circuit arrangement of Fig. 2 is illustrated in Fig. 4. In view of the characteristics of the ferroelectric liquid crystal, attention must be paid to the following point in order to realize the half-tone display. By applying a voltage pulse $V_p$ which is, for example, slightly greater than the upper limit $V_{th}^{(+)}$ of the dead zone, the light transmissive state of the liquid crystal device is stabilized to an intermediate value, and a half tone display can be attained. However, as already described, if the voltage pulse $V_p$ is kept applied, the phenomenon of a change of the light transmissive state is observed. That is, the ferroelectric liquid crystal exhibits the phenomonon that the kind of the voltage pulse before the next pulse is applied determines the next light transmissive state. In the example of Fig. 4, a voltage acting on the liquid crystal layer is once applied so that the light transmissivity of the liquid crystal device may become minimal, whereupon a voltage for attaining the required transmissivity of the half-tone is applied. That is, when the switching element is on, the second voltage signal whose crest value has an absolute value not smaller than that of the threshold value ($|V_{th}|$) [and preferably, not smaller than that of the saturation value ($|V_{sat}|$)] is applied so as to bring the light transmissive state of the liquid crystal layer into the saturated state. Subsequently, the third voltage signal whose crest value has an absolute value not smaller than that of the threshold value ($|V_{th}|$) and which is opposite in polarity to the second voltage signal is applied to the liquid crystal so as to establish the intermediate state. With this method, since the previous state of the liquid crystal layer is once cleared by the minus pulse, the intermediate state is obtained in correspondence with the magnitude of the signal voltage $V_{sig}$. This drive method will be explained below with more details. The scanning voltages which are applied to the picture elements of the first row, the picture elements of the second row, etc. .... are denoted by $V_{scan1}$, $V_{scan2}$, etc. ...., and the signal voltage which is applied to the signal electrode of a certain column is denoted by $V_{sig}$. The on-resistance of the corresponding switching element (TFT) 1 is denoted by $R_{on}$, and voltage waveforms which are applied to the liquid crystal layer under the assumption that the liquid crystal layer is quickly charged and discharged through the resistor 6, are denoted by $V_{lc1}$ and $V_{lc2}$.

First, during a period $t_1$ of the periods $t_1$ and $t_2$ during which the first row is scanned, the scanning voltage $V_{scan1}$ applied is a voltage which is lower than the threshold voltage of the TFT switching element, so that it is in the off state (the TFT is supposed to be of the N-channel type), and the source-drain path thereof has the off-resistance $R_{off}$. At this time, a voltage based on the voltages $V_{scan}^{(-)}$ and $V_{sig1}$ and the resistances $R_{off}$ and R is applied to the liquid crystal layer, and the magnitude $V(t_1)$ thereof becomes:

$$V(t_1) = V_{scan}^{(-)} + (V_{sig} - V_{scan}^{(-)}) \cdot \frac{R}{R + R_{off}} .$$

Here, assuming that $R_{off}$ be sufficiently greater than R, the second term of the right-hand side of the equation becomes $\simeq 0$, and $V(t_1) \simeq V_{scan}^{(-)}$ holds. By setting $V_{scan}^{(-)}$ at a value smaller than the lower limit of the dead zone of the ferroelectric liquid crystal, i.e. the threshold value $V_{th}^{(-)}$, the liquid crystal is cleared to a minus value in the period $t_1$. Subsequently, during the period $t_2$, the scanning voltage $V_{scan}^{(+)}$ greater than the threshold voltage $V_{th}$ of the TFT switching element is applied, so that it comes into the on state,

7

and the source-drain path then has the resistance $R_{on}$. At this time, the voltage $V(t_2)$ which is applied to the liquid crystal layer becomes:

$$V(t_2) = V_{scan}^{(+)} + (V_{sig} - V_{scan}^{(+)}) \cdot \frac{R}{R + R_{on}} \, ,$$

Assuming that R be sufficiently greater than $R_{on}$, the above expression becomes $V(t_2) \simeq V_{sig}$, and approximately the signal voltage $V_{sig}$ is applied to the liquid crystal layer. In this manner, the level of the signal voltage $V_{sig}$ is modulated, whereby a gradational display can be realized.

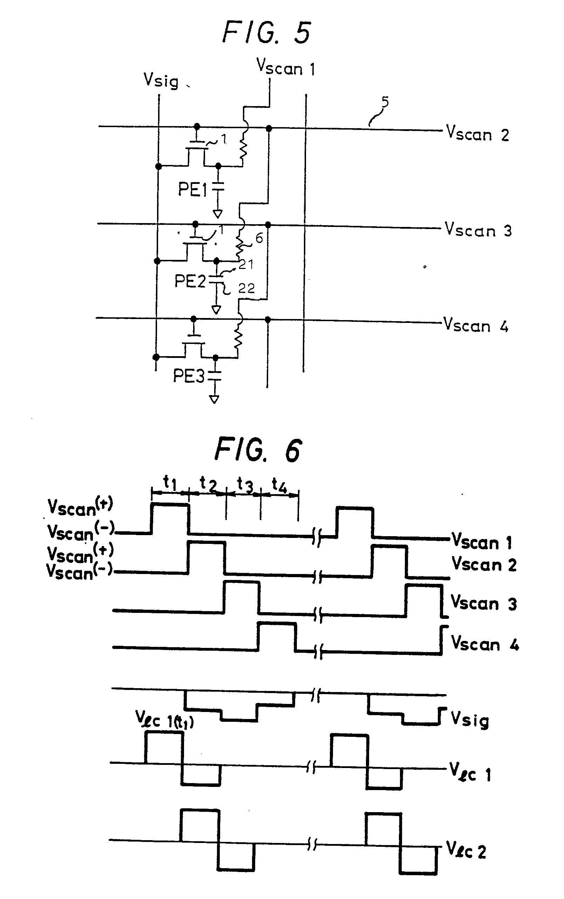

Fig. 5 shows a modified embodiment in which the control voltage $V_{cont}$ is Fig. 1 is the voltage of the scanning electrode of the adjacent picture element. The corresponding drive waveforms are shown in Fig. 6.

Scanning voltages $V_{scan1}$, $V_{scan2}$, $V_{scan3}$, ... serve both as the scanning voltages of the TFT switching elements and the control signals $V_{cont}$ of the picture elements of the next line. The signal voltage $V_{sig}$ is a writing voltage of minus potential, and voltages which are applied to the liquid crystal layers of the picture elements PE1, PE2, ... are denoted by $V_{lc1}$, $V_{lc2}$, ... First, the voltage $V_{lc1}$ is considered which is applied to the liquid crystal layer of the picture element PE1. Assuming that the TFTs have N-channel structure, the voltage $V_{scan2}$ is applied to the TFT of the picture element PE1 during the period $t_1$. Therefore, the potential of the gate electrode is smaller than the threshold voltage $V_{th}$ of the TFT switching element necessary to bring the TFT switching element into the off state, so that the channel portion has the resistance $R_{off}$. For this reason, the voltage $V_{lc1}(t_1)$ which is applied to the liquid crystal layer becomes the division of the voltage $V_{scan1}$ and the signal voltage $V_{sig}$ of the TFT switching element, and is expressed by:

$$V_{lc1}(t_1) = V_{sig} + (V_{scan}^{(+)} - V_{sig}) \cdot \frac{R_{off}}{R_{off} + R} \, .$$

Here, under the condition of $R_{off} \gg R$, the above expression approximately becomes $V_{lc1}(t_1) \simeq V_{scan}^{(+)}$.

In the period $t_2$, the scanning voltage $V_{scan}^{(+)}$ is applied to the gate electrode of the TFT of the picture element PE1, to bring the TFT into the on state, so that the channel portion comes to have the resistance $R_{on}$. At this time, the voltage $V_{lc1}(t_2)$ which is applied to the liquid crystal layer becomes:

$$V_{lc1}(t_2) = V_{sig} + (V_{scan}^{(-)} - V_{sig}) \frac{R_{on}}{R_{on} + R} \, ,$$

and approximately $V_{lc1}(t_2) \simeq V_{sig}$ under the condition of $R \gg R_{on}$. That is, assuming the time constants be sufficiently small, the voltages applied to the liquid crystal layer become as shown at $V_{lc1}$ and $V_{lc2}$ in Fig. 6. Here, the scanning voltages $V_{scan1}$, $V_{scan2}$, ... are set at a voltage magnitude sufficiently greater than the threshold voltage $V_{th}^{(+)}$ of the ferroelectric liquid crystal, whereby the liquid crystal layers are reset to a plus value immediately before the signal voltage is applied thereto. The signal voltage $V_{sig}$ is changed with a value which is somewhat smaller than the threshold voltage $V_{th}^{(-)}$, whereby the liquid crystal layer can be controlled in the intermediate state, and half-tone display is possible. In this case, a two-tone display may naturally be obtained by setting the signal voltage to an amplitude sufficiently greater than the dead zone.

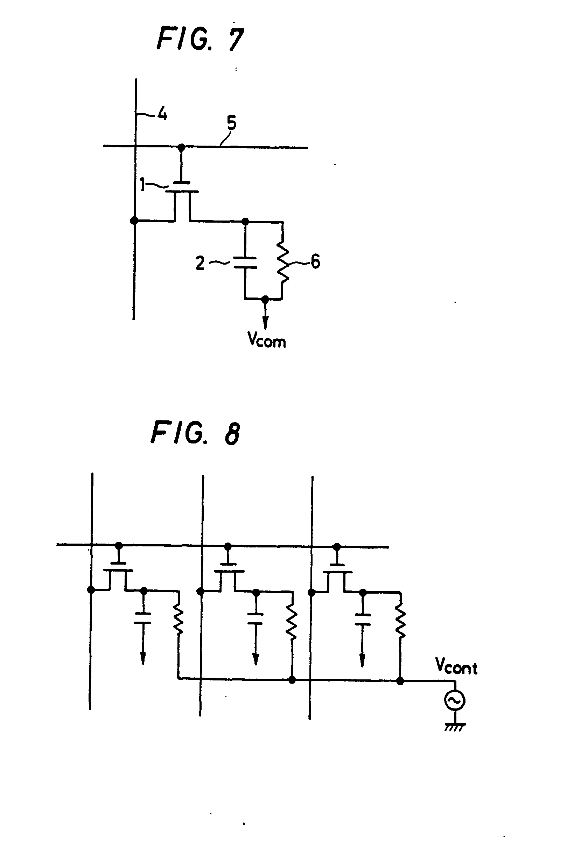

Fig. 7 shows a structure in which, in the embodiment of Fig. 1, the control element 3 is a resistor 6, and the control signal $V_{cont}$ is the common electrode voltage $V_{com}$. In this case, effects similar to those of the foregoing embodiments are attained.

While the structure in which the control signal $V_{cont}$ serves also as the certain voltage within the picture element has thus far been described, the control signal may also be connected to a quite separate signal source as shown in Fig. 8.

The foregoing examples have been described with reference to the embodiment where a resistor is used as control element for controlling the voltage applied to the respective region of the liquid crystal layer, however, as this element, also various other control elements different from a resistor can be used.

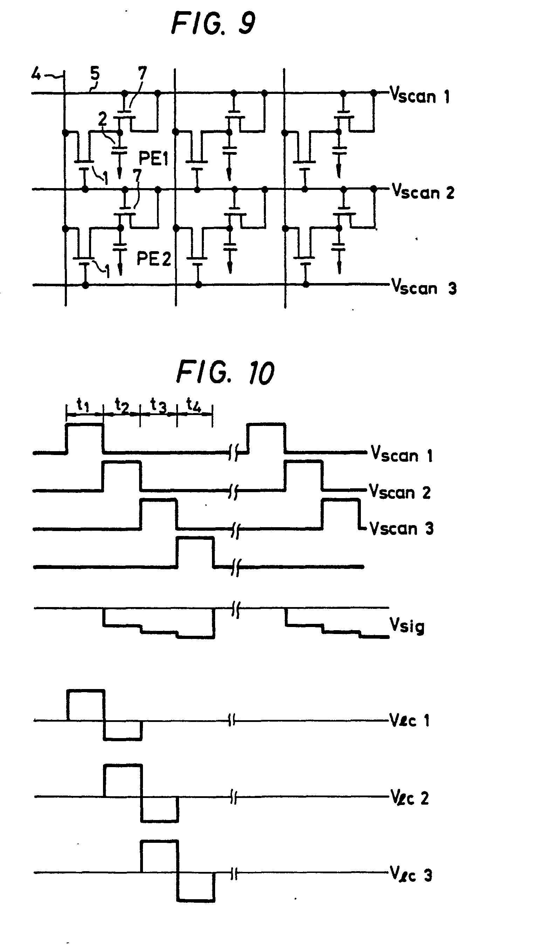

Fig. 9 shows an example which employs a TFT element 7 as a control element for controlling the voltage of the ferroelectric liquid crystal 2. This embodiment illustrates a circuit arrangement in which both the TFT switching element 1 and the TFT element 7 are of the N-channel type.

Fig. 10 illustrates a method of driving the circuit of Fig. 9. For example, a scanning voltage $V_{scan2}$ serves simultaneously as the scanning voltage of the TFT switching element 1 of the picture element PE1, the scanning voltage of the TFT element 7 of the picture element PE2 and the control voltage $V_{cont}$ of the liquid crystal layer of the picture element PE2. In a period $t_1$, the TFT element 7 of the picture element PE1 is brought into the on state by the voltage $V_{scan1}$, while at the same time the voltage $V_{scan1}$ is applied to the liquid crystal layer through the TFT element 7. Next, in a period $t_2$, the TFT element 7 of the picture element PE1 is brought into the off state because the voltage $V_{scan1}$ becomes a low level, and the TFT element 1 is brought into the on state by the voltage $V_{scan2}$. Thus, a signal voltage $V_{sig}$ is applied to the liquid crystal layer through the TFT switching element 1. Here, the scanning voltages $V_{scan1}$, $V_{scan2}$, ... are set at a voltage sufficiently greater than the absolute value ($|V_{th}|$) of the threshold voltage of the liquid crystal layer, whereby before the signal voltage is applied to the liquid crystal layer, the voltage of plus value is once applied to reset the state of the liquid crystal layer. Here, both half-tone and two-tone display are possible by adjusting the voltage level of the signal voltage $V_{sig}$.

In the case where the off-resistance $R_{off}$ of the TFT element is sufficiently high, the signal voltage $V_{sig}$ does not leak from the signal electrode 4, and any unnecessary voltage is not applied to the liquid crystal layer, so that no particular problem arises. However, in a case where the off-resistance $R_{off}$ of the TFT element is not sufficient, the TFT elements must be designed for suppressing the leakage of the signal voltage to be small so that $R_{off1} \gg R_{off7}$ may hold between the off-resistance $R_{off1}$ of the TFT element 1 and the off-resistance $R_{off7}$ of the TFT element 7. To this end, the configurations of the TFT elements, namely, the channel lengths L and the channel widths W need to be adjusted to make the off-resistances $R_{off}$ unequal. Alternatively, the channel portion of either of the TFT elements may be doped with an impurity by a process such as ion implantation, to change the threshold voltage $V_{th}$ of the TFT element and to change the off-resistance $R_{off}$ at the operation point.

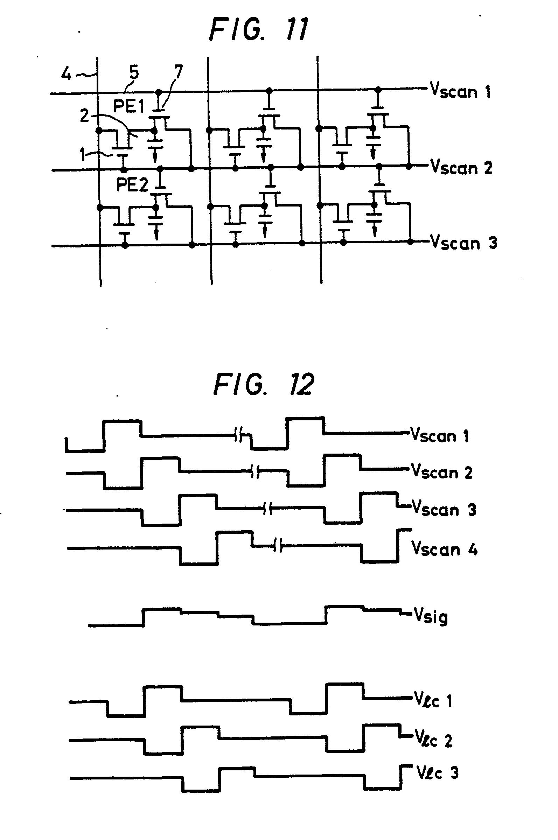

Fig. 11 shows a structure in which a control signal is applied to the scanning electrode of a TFT switching element 1, and the scanning voltage of a TFT element 7 is connected to the scanning electrodes of picture elements preceding the corresponding picture element by one row (if necessary, by a plurality of rows). A drive method therefor is as shown in Fig. 12. For example, a voltage $V_{scan2}$ has the role of resetting the liquid crystal layer of the picture element PE1 with a minus voltage and the role of scanning the TFT element 1 and bringing it into the on state in the next period.

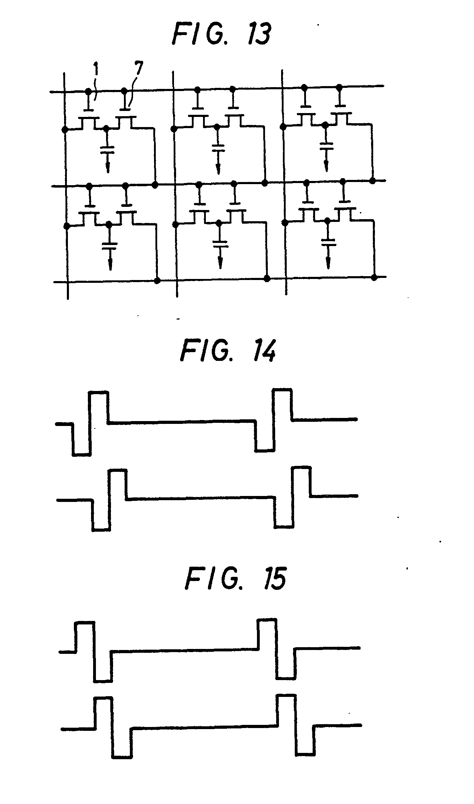

While, in the foregoing embodiments, the two TFT elements formed in each picture element have both been of the N-channel structure, they may well be a TFT of the P-channel structure and a TFT of the N-channel structure combined. Fig. 13 shows an embodiment of a circuit where elements of both channel types are combined. The embodiment can operate when the TFT element 1 and the TFT element 7 are of the N-channel and P-channel type, respectively or are combined reversely. Fig. 14 shows drive waveforms in the case where the TFT switching element 1 is of the N-channel and the TFT element 7 is of the P-channel type, while Fig. 15 shows drive waveforms in the case where the TFT switching element 1 is of the P-channel and the TFT element 7 is of the N-channel type.

Fig. 16 shows the schematic structure of a partial section of an active matrix display employing a ferroelectric liquid crystal. The substrate 8 is a transparent substrate of, for example, barium borosilicate glass or quartz glass. It is overlaid with a semiconductor thin film 12, such as polycrystalline silicon film or recrystallized silicon film, and an insulator film 13. The gate electrode 15, the drain electrode 14, the transparent electrode 10, etc. of a TFT element are formed by a known process of manufacture. A thin film 16 of, for example, an organic substance is formed on the TFT structure by spin coating or the like, whereby the thin film 16 outside the TFT portion is removed. A counter glass substrate 9 with a transparent electrode 10 is provided on the thin film 16. Owing to this structure, the cell gap is determined by the height of the TFT and the thin film 15, and a gap of approximately 2 μm or less can be formed over the whole display portion. Here, the liquid crystal 11 of the ingredients mentioned before is enclosed.

According to the present invention, the characteristics of ferroelectric liquid crystals are utilized in a new manner, and a favorable driving becomes possible even when switching elements of unsatisfactory characteristics such as TFT elements are used.

The liquid crystal is previously brought into a saturated state by utilizing a scanning voltage which is applied to the control electrode of the switching element such as a TFT element, whereupon an intermediate state is realized by a signal voltage, so that also half-tone displays of favorable reproducibility may be attained.

## Claims

1. Active matrix liquid crystal device comprising

a liquid crystal (2) sandwiched between display electrodes (21, 22) defining display portions, and switching elements (1) disposed at the respective intersection points between a plurality of signal electrodes (4) and a plurality of scanning electrodes (5) and switching the respective display portions, characterized in that

— the liquid crystal (2) is a bistable ferroelectric liquid crystal,

— the switching elements (1) are three-terminal switching elements having their control terminal connected to the respective scanning electrodes (5), one main terminal connected to the respective signal electrode (4) and the other main terminal to one (21) of the display electrodes (21, 22),

— a control element (3; 6; 7) is disposed at the juncture between each switching element (1) and one (21) of the display electrodes (21, 22) which is adapted, when the switching element (1) is in its OFF-state, to hold the absolute value of the crest value of the voltage applied to the liquid crystal (2) below its threshold value ($|V_{th}|$), and, when the switching element (1) is in its ON state, to apply a first voltage signal the absolute value of its crest value being less than the threshold value ($|V_{th}|$) to the liquid crystal (2) so as to hold it in the respective display portion in a light transmissive state, and to apply a second voltage signal the absolute value of its crest value being not less than the threshold value ($|V_{th}|$) to the liquid crystal (2) so as to change the light transmissive state.

2. The liquid crystal device according to claim 1, characterized in that the switching elements (1) are thin-film transistors.

3. The liquid crystal device according to claim 1 or 2, characterized in that the control elements (6) are resistance elements whose resistance value is larger than the ON-resistance of the switching elements (1) and smaller than the OFF-resistance of the switching elements (1).

4. The liquid crystal device according to any one of claims 1 to 3, characterized in that the control elements (6; 7) are disposed between the juncture of the switching elements (1) and one (21) of the display electrodes (21, 22) and the scanning electrodes (5).

5. The liquid crystal device according to one of claims 1 to 3, characterized in that the control elements (6) are disposed between the juncture of the corresponding switching element (1) and one (21) of the display electrodes (21, 22) and another of the scanning electrodes (5) connected to the switching element (1) adjoining the corresponding switching element (1).

6. The liquid crystal device according to one of claims 1 to 5, characterized in that the control elements (7) are three-terminal switching elements.

7. A method of driving active matrix liquid crystal devices comprising

a liquid crystal (2) sandwiched between display electrodes (21, 22) defining display portions and switching elements (1) disposed at the respective intersection points between a plurality of signal electrodes (4) and a plurality of scanning electrodes (5) and switching the respective display portions, characterized in that

— a bistable ferroelectric liquid crystal (2) is used,

— three-terminal switching elements (1) are used having their control terminal connected to the respective scanning electrode (5), one main terminal connected to the respective signal electrode (4) and the other main terminal to one (21) of the display electrodes (21, 22), and

— the following functions are carried out by means of control elements (3; 6; 7) disposed at the juncture between each switching element (1) and one (21) of the display electrodes (21, 22): when the switching element (1) is in its OFF-state, the absolute value of the crest value of the voltage applied to the liquid crystal (2) is held below its threshold value, ($|V_{th}|$) and, when the switching element (1) is in its ON state, a first voltage signal the absolute value of its crest value being less than the threshold value ($[|V_{th}|$) is applied to the liquid crystal (2) so as to hold it in the respective display portion in a light transmissive state, and a second voltage signal the absolute value of its crest value being not less than the threshold value ($|V_{th}|$) is applied to the liquid crystal (2) so as to change the light transmissive state.

8. The method according to claim 7, characterized in that the second voltage signal is a voltage signal whose crest value has an absolute value not less than a saturation value ($|V_{sat}|$) at which the light transmissive state is substantially not voltage dependent.

9. The method according to claim 7 or 8, characterized in that the average value of the voltage applied to the liquid crystal (2) is substantially equal to zero.

10. The method according to one of claims 7 to 9, characterized in that the period of time during which the first voltage signal is applied to the liquid crystal (2) is longer than the period of time during which the second voltage signal is applied to the liquid crystal (2).

11. The method according to one of claims 7 to 10, characterized in that the first voltage signal and the second voltage signal are pulse voltage signals.

12. The method according to one of claims 7 to 11, characterized in that after the application of the second voltage signal, a third voltage signal the absolute value of its crest value being not less than the threshold value ($|V_{th}|$) and having opposite polarity to the second voltage signal is applied to the liquid crystal (2) so as to change the light transmissive state.

13. The method according to claim 12, characterized in that the period of time during which the first voltage signal is applied to the liquid crystal (2) is longer than the period of time during which the second voltage signal and the third voltage signal are applied to the liquid crystal (2).

14. The method according to one of claims 11 to 13, characterized in that the third voltage signal is a pulse voltage signal.

15. The method according to one of claims 7 to 14, characterized in that thin-film transistors are used as three-terminal switching elements (1).

16. The method according to one of claims 7 to 15, characterized in that resistance elements are used as control elements (6) whose resistance value is larger than the ON-resistance of the switching elements (1) and smaller than the OFF-resistance of the switching elements (1).

17. The method according to one of claims 7 to 16, characterized in that control elements (6; 7) are used which are disposed between the juncture of the switching elements (1) and one (21) of the display electrodes (21, 22) and the scanning electrodes (5).

18. The method according to one of claims 7 to 16, characterized in that control elements (6) are used which are disposed between the juncture of the corresponding switching element (1) and one (21) of the display electrodes (21, 22) and another of the scanning electrodes (5) connected to the switching element (1) adjoining the corresponding switching element (1).

19. The method according to one of claims 7 to 18, characterized in that three-terminal switching elements are used as control elements (7).

# EP 0 176 763 B1

**Patentansprüche**

1. Flüssigkristallbauelement als aktive Matrix, umfassend:
einen Flüssigkristall (2), der zwischen Anzeigeabschnitten definierenden Anzeigeelektroden (21, 22) sandwichartig eingeschlossen ist, und Schaltelemente (1), die an den jeweiligen Schnittpunkten zwischen einer Mehrzahl von Signalelektroden (4) und einer Mehrzahl von Abtastelektroden (5) angeordnet sind und die jeweiligen Anzeigeabschnitte umschalten, dadurch gekennzeichnet, daß
  — der Flüssigkristall (2) ein bistabiler ferroelektrischer Flüssigkristall ist,
  — die Schaltelemente (1) Dreipol-Schaltelemente sind, wobei ihr Steueranschluß an die jeweiligen Abtastelektroden (5), ein Hauptanschluß an die jeweilige Signalelektrode (4) und der andere Hauptanschluß an eine (21) der Anzeigeelektroden (21, 22) angeschlossen ist,
  — am Verbindungspunkt zwischen jedem Schaltelement (1) und einer (21) der Anzeigeelektroden (21, 22) ein Steuerelement (3; 6; 7) angeordnet ist, das, wenn das Schaltelement (2) den AUS-Zustand hat, den Absolutwert des Spitzenwerts der an den Flüssigkristall (2) angelegten Spannung unter dessen Grenzwert ($|V_{th}|$) hält und, wenn das Schaltelement (1) den EIN-Zustand hat, ein erstes Spannungssignal, wobei der Absolutwert von dessen Spitzenwert kleiner als der Grenzwert ($|V_{th}|$) ist, an den Flüssigkristall (2) anlegt, um diesen in dem jeweiligen Anzeigeabschnitt in einem Lichtdurchlaßzustand zu halten, und ein zweites Spannungssignal, wobei der Absolutwert von dessen Spitzenwert nicht kleiner als der Grenzwert ($|V_{th}|$) ist, an den Flüssigkristall (2) anlegt, um dessen Lichtdurchlaßzustand zu ändern.

2. Flüssigkristallbauelement nach Anspruch 1, dadurch gekennzeichnet, daß die Schaltelemente (1) Dünnschicht-transistoren sind.

3. Flüssigkristallbauelement nach Anspruch 1 oder 2, dadurch gekennzeichnet, daß die Steuerelemente (6) Widerstände sind, deren Widerstandswert größer als der EIN-Widerstand der Schaltelemente (1) und kleiner als der AUS-Widerstand der Schaltelemente (1) ist.

4. Flüssigkristallbauelement nach einem der Ansprüche 1—3, dadurch gekennzeichnet, daß die Steuerelemente (6; 7) zwischen dem Verbindungspunkt der Schaltelemente (1) und einer (21) der Anzeigeelektroden (21, 22) und den Abtastelektroden (5) angeordnet sind.

5. Flüssigkristallbauelement nach einem der Ansprüche 1—3, dadurch gekennzeichnet, daß die Steuerelemente (6) zwischen dem Verbindungspunkt des jeweiligen Schaltelements (1) und einer (21) der Anzeigeelektroden (21, 22) und einer weiteren der Abtastelektroden (5), die mit dem an das entsprechende Schaltelement (1) angrenzenden Schaltelement (1) verbunden ist, angeordnet sind.

6. Flüssigkristallbauelement nach einem der Ansprüche 1—5, dadurch gekennzeichnet, daß die Steuerelemente (7) Dreipol-Schaltelemente sind.

7. Verfahren zum Ansteuern von Flüssigkristallbauelementen als aktive matrix, umfassend:
einen Flüssigkristall (2), der zwischen Anzeigeabschnitte definierenden Anzeigeelektroden (21, 22) und Schaltelementen (1), die an den jeweiligen Schnittpunkten zwischen einer Mehrzahl Signalelektroden (4) und einer Mehrzahl Abtastelektroden (5) angeordnet sind und die jeweiligen Anzeigeabschnitte umschalten, sandwichartig eingeschlossen ist, dadurch gekennzeichnet, daß
  — ein bistabiler ferroelektrischer Flüssigkristall (2) verwendet wird,
  — Dreipol-Schaltelemente (1) verwendet werden, wobei deren Steueranschluß an die jeweilige Abtastelektrode (5), ein Hauptanschluß an die jeweilige Signalelektrode (4) und der andere Hauptanschluß an eine (21) der Anzeigeelektroden (21, 22) angeschlossen ist, und
  — die folgenden Funktionen durch Steuerelemente (3; 6; 7), die am Verbindungspunkt zwischen jedem Schaltelement (1) und einer (21) der Anzeigeelektroden (21, 22) angeordnet sind, ausgeführt werden:
  wenn das Schaltelement (1) den AUS-Zustand hat, wird der Absolutwert des Spitzenwerts der an den Flüssigkristall (2) angelegten Spannung unter seinem Grenzwert ($|V_{th}|$) gehalten, und
  wenn das Schaltelement (1) den EIN-Zustand hat, wird ein erstes Spannungssignal, wobei der Absolutwert von dessen Spitzenwert kleiner als der Grenzwert ($|V_{th}|$) ist, an den Flüssigkristall (2) angelegt, um ihn im jeweiligen Anzeigeabschnitt in einem Lichtdurchlaßzustand zu halten, und ein zweites Spannungssignal, wobei der Absolutwert von dessen Spitzenwert nicht kleiner als der Grenzwert ($|V_{th}|$) ist, wird an den Flüssigkristall (2) angelegt, um dessen Lichtdurchlaßzustand zu ändern.

8. Verfahren nach Anspruch 7, dadurch gekennzeichnet, daß das zweite Spannungssignal ein Spannungssignal ist, dessen Spitzenwert einen Absolutwert hat, der nicht kleiner als ein Sättigungswert ($|V_{sat}|$) ist, bei dem der Lichtdurchlaßzustand im wesentlichen nicht spannungsabhängig ist.

9. Verfahren nach Anspruch 7 oder 8, dadurch gekennzeichnet, daß der Mittelwert der an den Flüssigkristal (2) angelegten Spannung im wesentlichen gleich Null ist.

10. Verfahren nach einem der Ansprüche 7—9, dadurch gekennzeichnet, daß die Zeitdauer, während welcher das erste Spannungssignal an den Flüssigkristall (2) angelegt wird, länger als die Zeitdauer ist, während welcher das zweite Spannungssignal an den Flüssigkristall (2) angelegt wird.

11. Verfahren nach einem der Ansprüche 7—10, dadurch gekennzeichnet, daß das erste Spannungssignal und das zweite Spannungssignal Impulsspannungssignale sind.

12. Verfahren nach einem der Ansprüche 7—11, dadurch gekennzeichnet, daß nach dem Anlegen des zweiten Spannungssignals ein drittes Spannungssignal, wobei der Absolutwert von dessen Spitzenwert nicht kleiner als der Grenzwert ($|V_{th}|$) ist und entgegengesetzte Polarität wie das zweite Spannungssignal hat, an den Flüssigkristall (2) angelegt wird, um dessen Lichtdurchlaßzustand zu ändern.

11

13. Verfahren nach Anspruch 12, dadurch gekennzeichnet, daß die Zeitdauer, während welcher das erste Spannungssignal an den Flüssigkristall (2) angelegt wird, länger als die Zeitdauer ist, während welcher das zweite und das dritte Spannungssignal an den Flüssigkristall (2) angelegt werden.

14. Verfahren nach einem der Ansprüche 11—13, dadurch gekennzeichnet, daß das dritte Spannungssignal ein Impulsspannungssignal ist.

15. Verfahren nach einem der Ansprüche 7—14, dadurch gekennzeichnet, daß als Dreipol-Schaltelemente (1) Dünnschichttransistoren verwendet werden.

16. Verfahren nach einem der Ansprüche 7—15, dadurch gekennzeichnet, daß als Steuerelemente (6) Widerstandselemente verwendet werden, deren Widerstandswert größer als der EIN-Widerstand der Schaltelemente (1) und kleiner als der AUS-Widerstand der Schaltelemente (1) ist.

17. Verfahren nach einem der Ansprüche 7—16, dadurch gekennzeichnet, daß Steuerelemente (6; 7) verwendet werden, die zwischen dem Verbindungspunkt der Schaltelemente (1) mit einer (21) der Anzeigelektroden (21, 22) und den Abtastelektroden (5) liegen.

18. Verfahren nach einem der Ansprüche 7—16, dadurch gekennzeichnet, daß Steuerelemente (6) verwendet werden, die zwischen dem Verbindungspunkt des jeweiligen Schaltelements (1) mit einer (21) der Anzeigeelektroden (21, 22) und einer weiteren der Abtastelektroden (5), die mit dem an das jeweilige Schaltelement (1) angrenzenden Schaltelement (1) verbunden ist, angeordnet sind.

19. Verfahren nach einem der Ansprüche 7—18, dadurch gekennzeichnet, daß als Steuerelemente (7) Dreipol-Schaltelemente verwendet werden.

**Revendications**

1. Dispositif à cristal liquide à matrice active, comprenant un cristal liquide (2) pris en sandwich entre des électrodes d'affichage (21, 22) définissant des zones d'affichage, et des éléments de commutation (1) disposés aux points d'intersection respectifs entre une pluralité d'électrodes de signal (4) et une pluralité d'électrodes de balayage (5) et commmutant les zones d'affichage respectives, caractérisé en ce que
— le cristal liquide (2) est un cristal liquide ferroélectrique bistable,
— les éléments de commutation (1) sont des éléments de commutation à trois bornes dont la borne de commande est raccordée aux électrodes de balayage respectives (5), une borne principale raccordée à l'électrode de signal respective (4) et l'autre borne principale à l'une (21) des électrodes d'affichage (21, 22),
— un élément de commande (3; 6; 7) est disposé à la jonction entre chaque élément de commutation (1) et l'une (21) des électrodes d'affichage (21, 22), et est adapté, lorsque l'élément de commutation (1) est sur la position ARRET, à maintenir la valeur absolue de la valeur de crête de la tension appliquee au cristal liquide (2) en-dessous de sa valeur de seuil ($|V_{th}|$), et, lorsque l'élément de commutation (1) est sur la position MARCHE, à appliquer au cristal liquide (2) un premier signal de tension, dont la valeur absolue de sa valeur de crête est inférieure à la valeur de seuil ($|V_{th}|$), de façon à le maintenir dans la zone d'affichage respective dans la condition de transmission de lumière, et à appliquer au cristal liquide (2) un second signal de tension dont la valeur absolue de sa valeur de crête n'est pas inférieure à la valeur de seuil ($|V_{th}|$), de façon à modifier la condition de transmission de la lumière.

2. Dispositif à cristal liquide selon la revendication 1, caractérisé en ce que les éléments de commutation (1) sont des transistors à couche mince.

3. Dispositif à cristal liquide selon la revendication 1 ou 2, caractérisé en ce que les éléments de commande (6) sont des éléments de résistance dont la valeur ohmique est supérieure à celle de la résistance en condition MARCHE des éléments de commutation (1) et inférieure à la résistance en condition ARRET des éléments de commutation (1).

4. Dispositif à cristal liquide selon l'une des revendications 1 à 3, caractérisé en ce que les éléments de commande (6; 7) sont disposés entre la jonction des éléments de commutation (1) et de l'une (21) des électrodes d'affichage (21, 22) et les électrodes de balayage (5).

5. Dispositif à cristal liquide selon l'une des revendications 1 à 3, caractérisé en ce que les éléments de commande (6) sont disposés entre la jonction de l'élément de commutation (1) correspondant et de l'une (21) des électrodes d'affichage (21, 22) et une autre des électrodes de balayage (5) raccordée à l'élément de commutation (1) voisin de l'élément de commutation correspondant (1).

6. Dispositif à cristal liquide selon l'une des revendications 1 à 5, caractérisé en ce que les éléments de commande (7) sont des éléments de commutation à trois bornes.

7. Procédé de commande d'un dispositif à cristal liquide à matrice active, comprenant un cristal liquide (2) pris en sandwich entre des électrodes d'affichage (21, 22) définissant des zones d'affichage, et des éléments de commutation (1) disposés aux points d'intersection respectifs entre une pluralité d'électrodes de signal (4) et une pluralité d'électrodes de balayage (5) et commutant les zones d'affichage respectives, caractérisé en ce que
— l'on utilise un cristal liquide ferroélectrique bistable (2),
— l'on utilise des éléments de commutation a trois bornes (1) dont la borne de commande est raccordée à l'électrode de balayage respective (5), une borne principale raccordée à l'électrode de signal respective (4) et l'autre borne principale à l'une (21) des électrodes d'affichage (21, 22), et
— les fonctions suivantes sont remplies au moyen des éléments de commande (3; 6; 7) disposés à la jonction entre chaque élément de commutation (1) et l'une (21) des électrodes d'affichage (21, 22);

12

EP 0 176 763 B1

lorsque l'élément de commutation (1) est dans sa position ARRET, la valeur absolue de la valeur de crête de la tension appliquée au cristal liquide (2) est maintenue en-dessous de sa valeur de seuil ($|V_{th}|$), et, lorsque l'élément de commutation (1) est sur la position MARCHE, un premier signal de tension dont la valeur absolue de sa valeur de crête est inférieure à la valeur de seuil ($|V_{th}|$), est appliqué au cristal liquide (2), de façon à le maintenir dans la zone d'affichage respective dans la condition de transmission de lumière, et un second signal de tension, dont la valeur absolue de sa valeur de crête n'est pas inférieure à la valeur de seuil ($|V_{th}|$), est appliqué au cristal liquide (2), de façon à modifier la condition de transmission de la lumière.

8. Procédé selon la revendication 7, caractérisé en ce que le second signal de tension est un signal de tension dont la valeur de crête présente une valeur absolue qui n'est pas inférieure à une valeur de saturation ($|V_{sat}|$) pour laquelle la condition de transmission de lumière n'est pas fonction de la tension.

9. Procédé selon la revendication 7 ou 8, caractérisé en ce que la valeur moyenne de la tension appliquée au cristal liquide (2) est pratiquement égale à zéro.

10. Procédé selon l'une des revendications 7 à 9, caractérisé en ce que la période de temps pendant laquelle le premier signal de tension est appliqué au cristal liquide (2) est plus longue que la période de temps pendant laquelle le second signal de tension est appliquè au cristal liquide (2).

11. Procédé selon l'une des revendications 7 à 10, caractérisé en ce que le premier signal de tension et le second signal de tension sont des signaux de tension impulsionnels.

12. Procédé selon l'une des revendications 7 à 11, caractérisé en ce qu'après l'application du second signal de tension, un troisième signal de tension, dont la valeur absolue de sa valeur de crête n'est pas inférieure à la valeur de seuil ($|V_{th}|$) et ayant une polarité opposée à celle du second signal de tension, est appliqué au cristal liquide (2) de façon à modifier la condition de transmission de la lumière.

13. Procédé selon la revendication 12, caractérisé en ce que la période de temps pendant laquelle le premier signal de tension est appliqué au cristal liquide (2) est plus longue que la période de temps pendant laquelle le second signal de tension et le troisième signal de tension sont appliqués au cristal liquide (2).

14. Procédé selon l'une des revendications 11 à 13, caractérisé en ce que le troisième signal de tension est un signal de tension impulsionnel.

15. Procédé selon l'une des revendications 7 à 14, caractérisé en ce que des transistors à couche mince sont utilisés comme éléments de commutation (1) à trois bornes.

16. Procédé selon l'une des revendications 7 à 15, caractérisé en ce que comme éléments de commande (6), on utilise des éléments de résistance dont la valeur ohmique est supérieure à la résistance en position MARCHE des éléments de commutation (1) et inférieure à la résistance en position ARRET des éléments de commutation (1).

17. Procédé selon l'une des revendications 7 à 16, caractérisé en ce que l'on utilise des éléments de commande (6; 7) qui sont disposés entre la jonction des éléments de commutation (1) et de l'une (21) des électrodes d'affichage (21, 22) et les électrodes de balayage (5).

18. Procédé selon l'une des revendications 7 à 16, caractérisé en ce que l'on utilise des éléments de commande (6) qui sont disposès entre la jonction de l'élément de commutation (1) et de l'une (21) des électrodes d'affichage (21, 22) et une autre des électrodes de balayage (5) raccordée à l'élément de commutation (1) voisin de l'élément de commutation correspondant (1).

19. Procédé selon l'une des revendications 7 à 18, caractérisé en ce que des éléments de commutation à trois bornes sont utilisés comme éléments de commande (7).

FIG. 1

FIG. 2

FIG. 3

# FIG. 4

## FIG. 5

## FIG. 6

## FIG. 7

## FIG. 8

## FIG. 9

## FIG. 10

## FIG. 11

## FIG. 12

## FIG. 13

## FIG. 14

## FIG. 15

FIG. 16

FIG. 17

FIG. 18

# FIG. 19

## (a)

## (b)

## (c)

FIG. 20
(a)

(b)

# FIG. 21